# FASCICULE DE BREVET EUROPEEN

(11) **EP 1 564 475 B1**
(45) Date de publication et mention de la délivrance du brevet: **20.05.2009**
(21) Numéro de dépôt: 05290329.1
(22) Date de dépôt: 15.02.2005
(51) Int. Cl.: F16L 55/027

(54) **Conditionneur d'écoulement pour canalisation de transport de fluide**
Strömungskonditionierer für fluidtreibende Leitung
Flow conditioner for fluid conveying conduit

(30) Priorité: 17.02.2004 FR 0401558
(43) Date de publication de la demande: 17.08.2005
(73) Titulaire: GDF SUEZ, 75008 Paris (FR)
(72) Inventeur: Cancade, Julien, 94140 Alfortville (FR); Beccat, Jean-Luc, 75012 Paris (FR)
(74) Mandataire: Thévenet, Jean-Bruno

(56) Documents cités:
- FR-A- 2 319 072
- FR-A- 2 566 092
- FR-A- 2 776 033

## Description

### Arrière-plan de l'invention

La présente invention se rapporte au domaine général des conditionneurs d'écoulement pour canalisations de transport de fluide. Elle vise plus particulièrement un conditionneur d'écoulement pour canalisation de transport de gaz comprenant au moins un redresseur d'écoulement associé à une plaque poreuse disposée en amont du redresseur d'écoulement.

Les compteurs de volume de gaz à turbine qui sont installés dans des postes de livraison sont sensibles aux conditions d'utilisation. En particulier, lorsque ces compteurs sont installés en aval de détendeurs ou d'obstacles tels que des vannes, coudes, doubles coudes, réductions, tés ou d'autres éléments non rectilignes, leur précision risque d'être affectée par les perturbations engendrées par ces obstacles.

Afin de supprimer ces perturbations, il est connu de munir les compteurs à turbine de conditionneurs d'écoulement. Ces équipements permettent d'atténuer les perturbations d'écoulement telles que la rotation de la veine gazeuse, vortex ou « swirl », les effets de jet ou les pulsations acoustiques, sur des distances réduites par rapport aux très grandes longueurs droites habituellement nécessaires à une atténuation naturelle.

Il existe de nombreux types de conditionneurs d'écoulement capables de réduire la rotation de la veine gazeuse. De tels conditionneurs se composent essentiellement d'une plaque perforée comprenant un ensemble de trous répartis sur plusieurs anneaux concentriques centrés sur le centre de la plaque perforée.

Cependant, très peu de conditionneurs réduisent de manière satisfaisante la rotation de la veine gazeuse, la dissymétrie et les pulsations de l'écoulement. Ils sont en effet conçus pour être utilisés avec des longueurs droites en amont et en aval correspondant à plusieurs fois le diamètre nominal des canalisations, ce qui limite leur intérêt lorsqu'on veut réaliser des postes de détente-comptage compacts.

Aussi, afin de supprimer les perturbations tout en réduisant la taille des postes, la Demanderesse a proposé un conditionneur d'écoulement décrit dans la demande de brevet FR 2,776,033. Selon l'un des modes de réalisation, le conditionneur comprend une plaque perforée et une plaque poreuse qui est placée en amont de la plaque perforée et est mise en contact avec celle-ci de telle sorte que l'ensemble du débit de gaz traverse ces deux éléments. La présence d'une plaque poreuse dans le conditionneur est particulièrement avantageuse puisqu'elle permet d'améliorer sensiblement le pouvoir homogénéisant de la plaque perforée sur l'écoulement.

Toutefois, un risque existe que la plaque poreuse d'un tel conditionneur d'écoulement se colmate, ce qui aurait pour conséquence de provoquer une forte augmentation de la perte de charge, mais surtout une rupture de la continuité d'alimentation en gaz. Un tel colmatage pourrait se produire de façon exceptionnelle notamment lorsque des impuretés présentes dans le gaz viennent boucher les pores de la plaque poreuse.

### Objet et résumé de l'invention

La présente invention vise donc à pallier de tels inconvénients en proposant un conditionneur d'écoulement compact qui permet de supprimer efficacement toutes les perturbations d'écoulement tout en évitant tout risque de rupture de la continuité d'alimentation en fluide.

A cet effet, il est prévu un conditionneur d'écoulement pour canalisation de transport de fluide, comprenant un corps principal sensiblement tubulaire formant support, au moins un redresseur d'écoulement disposé à l'intérieur du corps principal essentiellement perpendiculairement à l'axe XX' de celui-ci, et une plaque poreuse disposée à l'intérieur du corps principal en amont du redresseur d'écoulement parallèlement à celui-ci, caractérisé en ce que les éléments du conditionneur sont disposés de sorte qu'une partie substantielle du débit de fluide traverse le redresseur d'écoulement et la plaque poreuse en l'absence de colmatage de la plaque poreuse, et en ce qu'il comporte en outre un circuit de dérivation pour assurer une continuité d'écoulement du débit de fluide en cas de colmatage de la plaque poreuse.

De façon plus particulière, un élément fixe et un élément mobile sont disposés à l'intérieur du corps principal, l'élément mobile étant en contact avec l'élément fixe en l'absence de colmatage de la plaque poreuse et apte à être déplacé axialement en translation vers l'aval par rapport à l'élément fixe de façon à dégager un passage de dérivation pour le gaz en cas de colmatage de ladite plaque poreuse.

De préférence, le conditionneur comporte en outre des moyens pour maintenir l'élément mobile en contact avec l'élément fixe en l'absence de colmatage de la plaque poreuse et des moyens de translation de l'élément mobile par rapport à l'élément fixe en cas de colmatage de la plaque poreuse.

De la sorte, dans les conditions normales d'utilisation, une partie substantielle du débit de fluide traverse le redresseur d'écoulement et la plaque poreuse, ce qui permet d'atténuer sensiblement les perturbations d'écoulement en aval. En cas de colmatage de la plaque poreuse, le circuit de dérivation permet alors d'assurer une continuité d'écoulement du débit de fluide en dégageant un passage de dérivation pour le fluide.

Selon un mode de réalisation de l'invention, l'élément mobile est une bague de support de la plaque poreuse ayant un diamètre externe inférieur à un diamètre interne du corps principal, et l'élément fixe est une couronne disposée à l'intérieur du corps principal en amont de la plaque poreuse, parallèlement à celle-ci et ayant un diamètre interne inférieur au diamètre externe de la bague mobile.

Avantageusement, le conditionneur comporte des moyens pour produire une force d'attraction magnétique de maintien de la bague mobile contre la couronne fixe. Cette force d'attraction magnétique peut être obtenue au moyen d'au moins un aimant permanent ou d'au moins un électroaimant fixé à la couronne fixe, la bague mobile étant essentiellement constituée d'au moins un élément ferromagnétique.

Toujours avantageusement, la bague mobile comporte au moins une tige de guidage s'étendant axialement vers l'amont et coopérant avec un trou pratiqué au travers de la couronne fixe de façon à autoriser une translation axiale de la bague mobile par rapport à la couronne fixe.

De préférence, la tige de guidage est munie d'un élément réglable de butée avec une face amont de la couronne fixe.

Selon un autre mode de réalisation de l'invention, l'élément fixe est constitué par la plaque poreuse ayant un diamètre externe inférieur à un diamètre interne du corps principal, et l'élément mobile est un anneau disposé autour de la plaque poreuse, entre le diamètre externe de la plaque poreuse et le diamètre interne du corps principal.

Le redresseur d'écoulement peut comporter au moins une tige de guidage s'étendant axialement vers l'amont et coopérant avec un trou pratiqué au travers de l'anneau mobile de façon à autoriser une translation axiale de l'anneau mobile par rapport à la plaque poreuse.

La tige de guidage peut être munie d'un ressort interposé entre le redresseur d'écoulement et l'anneau mobile de façon à maintenir l'anneau mobile autour de la plaque poreuse.

De préférence, l'anneau mobile comporte un élément réglable de butée destiné à maintenir dégagé le passage de dérivation en cas de colmatage de la plaque poreuse. Ceci permet d'éviter un phénomène d'oscillations auto-entretenues de l'anneau mobile qui aurait un effet néfaste sur la qualité de comptage.

Selon une caractéristique avantageuse de l'invention, la plaque poreuse présente une épaisseur de l'ordre de 10 mm et est réalisée en un alliage de nickel-chrome.

La distance entre la plaque perforée et le redresseur d'écoulement en l'absence de colmatage de la plaque poreuse est par exemple comprise entre 5 et 25 mm environ.

Le redresseur d'écoulement peut être une plaque perforée et le fluide être un fluide gazeux.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en perspective et en éclaté d'un conditionneur d'écoulement selon un mode de réalisation de l'invention ;
- les figures 2A et 2B sont des vues en coupe axiale du conditionneur de la figure 1 dans deux conditions d'utilisation différentes ;
- la figure 3 est une vue en perspective et en éclaté d'un conditionneur selon un autre mode de réalisation de l'invention ;
- les figures 4A et 4B sont des vues en coupe axiale du conditionneur de la figure 3 dans deux conditions d'utilisation différentes ;
- la figure 5 montre des courbes donnant le gain de justesse de différentes configurations du conditionneur selon l'invention ; et
- la figure 6 montre des courbes donnant le niveau de bruit de différentes configurations du conditionneur selon l'invention.

### Description détaillée d'un mode de réalisation

Sur les figures, le conditionneur d'écoulement 2, 2' est destiné aux canalisations de transport de gaz. De manière générale, la présente invention s'applique aux conditionneurs d'écoulement pour canalisations de transport de tout type de fluide.

Le conditionneur d'écoulement 2, 2' comprend essentiellement un corps principal 4 tubulaire d'axe XX' formant support. A son extrémité aval, le corps principal 4 comporte une collerette 6 permettant sa fixation sur une canalisation de transport de gaz (non représentée). Le corps principal 4 est disposé à l'intérieur de la canalisation de sorte que son axe XX' soit confondu avec celui de la canalisation.

Le conditionneur 2, 2' comprend également au moins un redresseur d'écoulement 8 disposé à l'intérieur du corps principal 4 essentiellement perpendiculairement à l'axe XX' de celui-ci, et une plaque poreuse 10 disposée à l'intérieur du corps principal 4 en amont du redresseur d'écoulement 8 parallèlement à celui-ci.

Comme illustré sur les figures, le redresseur d'écoulement peut être une plaque perforée 8 fixée à l'intérieur du corps principal 4. Elle peut par exemple être formée en une seule pièce avec le corps principal 4. Elle comporte en outre des ouvertures dont la répartition et les dimensions sont optimisées de façon à participer à l'atténuation des perturbations de l'écoulement du gaz. Par exemple, elle peut comprendre un trou central 12 et un ensemble de trous 12' répartis sur plusieurs anneaux concentriques centrés sur l'axe XX' du corps principal 4.

Alternativement, le redresseur d'écoulement peut être de type à faisceau de tubes ou à ailettes.

La plaque poreuse 10 est positionnée à l'intérieur du corps principal 4 de sorte qu'une partie substantielle (voire l'ensemble) du débit de gaz traverse la plaque poreuse et la plaque perforée 8 en l'absence de colmatage de la plaque poreuse. La plaque poreuse 10 permet d'améliorer l'efficacité du conditionneur à écoulement en contribuant à éliminer les dissymétries et à atténuer les forts niveaux de turbulence. Elle a un excellent pouvoir homogénéisant sur l'écoulement tout en détruisant les grosses structures turbulentes.

De préférence, le matériau poreux utilisé est un alliage de nickel-chrome. Le diamètre moyen des pores peut être avantageusement de l'ordre de 0,9 mm avec une surface de contact avec l'écoulement (ou surface spécifique) de l'ordre de 1700 m2/m3 et une épaisseur de l'ordre de 10 mm.

Le conditionneur d'écoulement comporte en outre un circuit de dérivation pour assurer une continuité d'écoulement du débit de gaz en cas de colmatage de la plaque poreuse. Par colmatage de la plaque poreuse, on entend que les pores de celle-ci sont au moins partiellement bouchés par des impuretés provenant du gaz de sorte que la perte de charge augmente fortement.

Le circuit de dérivation comporte un élément fixe et un élément mobile disposés à l'intérieur du corps principal, l'élément mobile étant en contact avec l'élément fixe en l'absence de colmatage de la plaque poreuse et apte à être déplacé axialement en translation vers l'aval par rapport à l'élément fixe de façon à dégager un passage de dérivation pour le gaz en cas de colmatage de ladite plaque poreuse.

Le circuit de dérivation comporte en outre des moyens pour maintenir l'élément mobile en contact avec l'élément fixe en l'absence de colmatage de la plaque poreuse et des moyens de translation de l'élément mobile par rapport à l'élément fixe de façon à permettre un déplacement de cet élément mobile en cas de colmatage de la plaque poreuse.

On décrira maintenant deux modes de réalisation du circuit de dérivation du conditionneur d'écoulement selon l'invention.

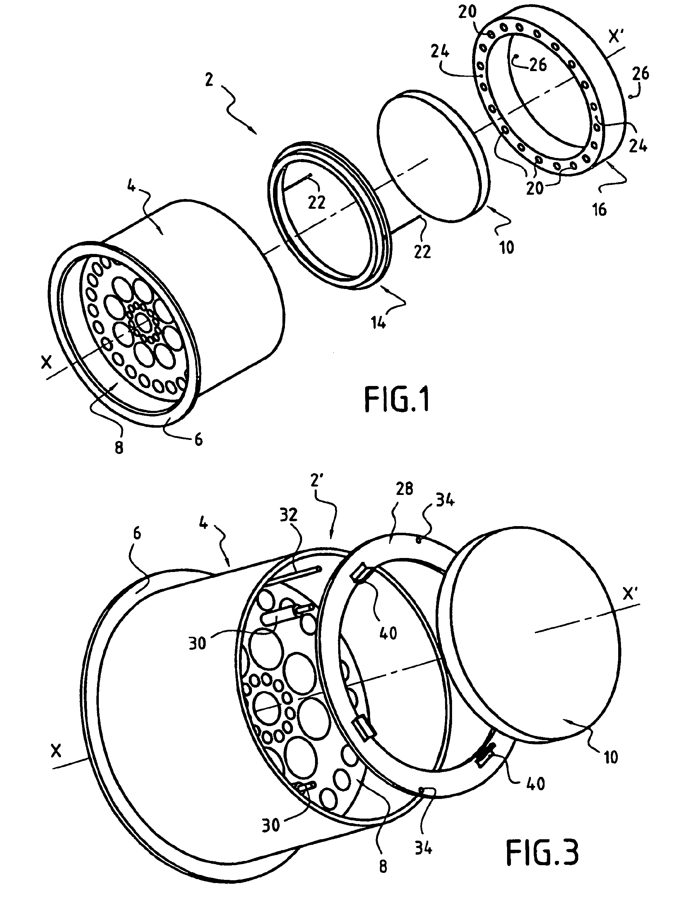

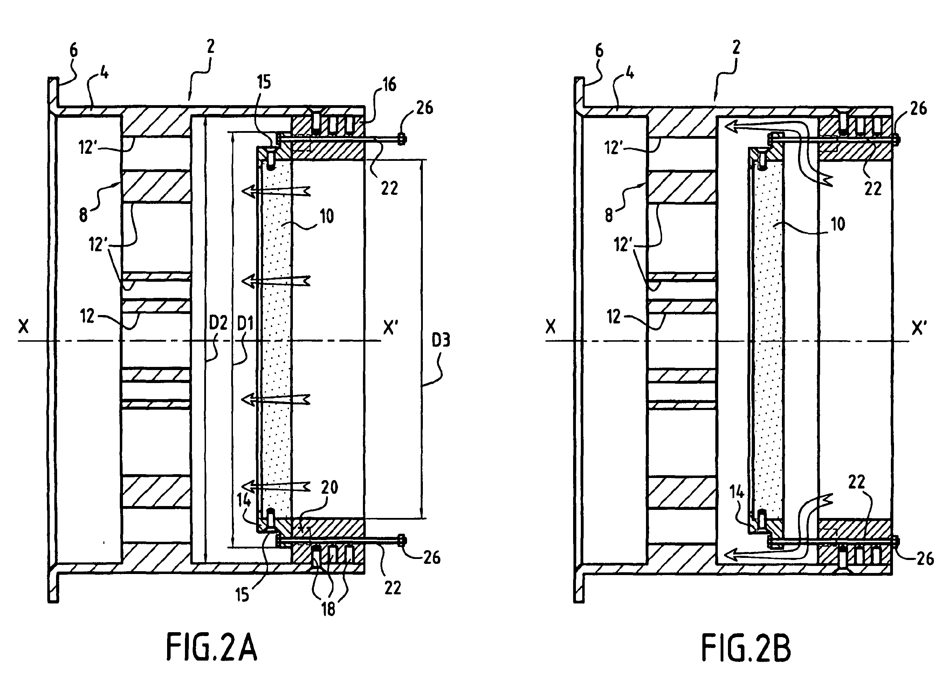

Selon un mode de réalisation illustré par les figures 1, 2A et 2B, l'élément mobile du circuit de dérivation est une bague 14 de support de la plaque poreuse 10 ayant un diamètre externe D1 inférieur à un diamètre interne D2 du corps principal. La plaque poreuse est par exemple fixée sur la bague mobile 14 par l'intermédiaire de vis de pression 15.

L'élément fixe du circuit de dérivation est une couronne 16 disposée à l'intérieur du corps principal 4 en amont de la plaque poreuse 10, parallèlement à celle-ci et ayant un diamètre interne D3 inférieur au diamètre externe D1 de la bague mobile 14. La fixation de la couronne 16 sur le corps principal 4 est réalisée à l'aide de vis de serrage 18.

La couronne fixe 16 comporte au moins un aimant permanent 20 destiné à produire une force d'attraction magnétique pour le maintien de la bague mobile 14 en l'absence de colmatage de la plaque poreuse 10. A cet effet, la bague mobile 14 se compose essentiellement d'au moins un élément ferromagnétique, choisi par exemple parmi les éléments suivants : fer, nickel et cobalt.

De préférence, la couronne fixe 16 comporte une pluralité d'aimants permanents 20 réalisés par exemple en alliage de samarium-cobalt et qui sont régulièrement répartis sur toute sa circonférence. Par exemple, de tels aimants peuvent présenter un diamètre de 8 mm et une longueur de 20 mm avec une force portante unitaire de l'ordre de 2,2 kg.

Alternativement, lorsque la nature du fluide utilisé l'autorise, la force d'attraction magnétique de maintien de la bague mobile 14 en l'absence de colmatage de la plaque poreuse 10 peut être obtenue par au moins un électroaimant (non représenté) fixé à la couronne fixe 16. Dans ce cas, la bague mobile 14 est également essentiellement constituée d'au moins un élément ferromagnétique.

La bague mobile 14 comporte au moins une tige de guidage 22 s'étendant axialement vers l'amont et coopérant avec un trou 24 pratiqué au travers de la couronne fixe 16 de façon à autoriser une translation axiale de la bague mobile par rapport à la couronne fixe. Sur les figures 1, 2A et 2B, la bague mobile 14 comporte de préférence deux tiges de guidage 22 diamétralement opposées. Ces tiges de guidage sont par exemple soudées sur la bague mobile 14.

De façon avantageuse, chacune de ces tiges de guidage 22 est munie d'un élément réglable 26 formant butée avec une face amont de la couronne fixe 16.

Le mode de fonctionnement du conditionneur ainsi décrit découle de manière évidente de ce qui précède.

En condition d'utilisation normale (figure 2A), c'est à dire en l'absence de colmatage de plaque poreuse 10, la bague mobile 14 est maintenue contre la couronne fixe 16 grâce à la force d'attraction magnétique exercée par les aimants 20. Dans cette configuration, l'ensemble du débit gaz provenant de la canalisation traverse la plaque poreuse 10, puis la plaque perforée 8.

En cas de colmatage du matériau poreux utilisé par la plaque poreuse 10 (figure 2B), la perte de charge du débit de gaz augmente, ainsi que la pression du débit de gaz sur la plaque poreuse 10. Lorsque cette pression atteint une pression supérieure à la force de retenue des aimants 20, la plaque poreuse 10 subit un mouvement de translation vers l'aval sous la poussée du gaz et les tiges de guidage 22 coulissent dans les trous 24 jusqu'à ce que l'élément réglable 26 vienne en butée avec la face amont de la couronne fixe 16. Un passage de dérivation pour le gaz s'ouvre ainsi entre la couronne fixe 16 et la bague mobile 14 permettant d'assurer la continuité de livraison de gaz.

Dans la configuration d'utilisation normale du conditionneur, on notera qu'il est possible de régler la distance entre la plaque perforée 8 et la plaque poreuse 10. Cette distance est par exemple comprise entre 5 et 25 mm, et de préférence de l'ordre de 10 mm.

Dans la configuration de colmatage du matériau poreux, il est également possible de régler cette distance entre la plaque perforée 8 et la plaque poreuse 10 en modifiant notamment les éléments de butée 26.

De plus, la force de retenue de la bague mobile 14 sur la couronne fixe 16 peut être réglée en fonction du nombre des aimants 20 implantés sur la couronne fixe. Ce réglage s'effectue suivant le diamètre de la canalisation sur laquelle est monté le conditionneur et selon le niveau toléré de colmatage du matériau poreux.

On notera également qu'un mode de fonctionnement intermédiaire du conditionneur 2 est envisageable. Dans un tel mode de fonctionnement (non représenté sur les figures), la bague de support de la plaque poreuse est fixe par rapport à la couronne et elle est maintenue à une certaine distance de celle-ci, par exemple par l'intermédiaire d'une butée interposée entre la bague et la couronne. La présence d'aimants permanents dans la couronne n'est par ailleurs pas nécessaire. Dans cette configuration, le circuit de dérivation est donc en permanence ouvert. De la sorte, en l'absence de colmatage du matériau poreux, une partie substantielle du débit de fluide traverse la plaque poreuse et le débit restant s'écoule par le circuit de dérivation. En cas de colmatage du matériau poreux, l'ensemble du débit de fluide emprunte le circuit de dérivation de façon à assurer une continuité d'écoulement du débit de fluide.

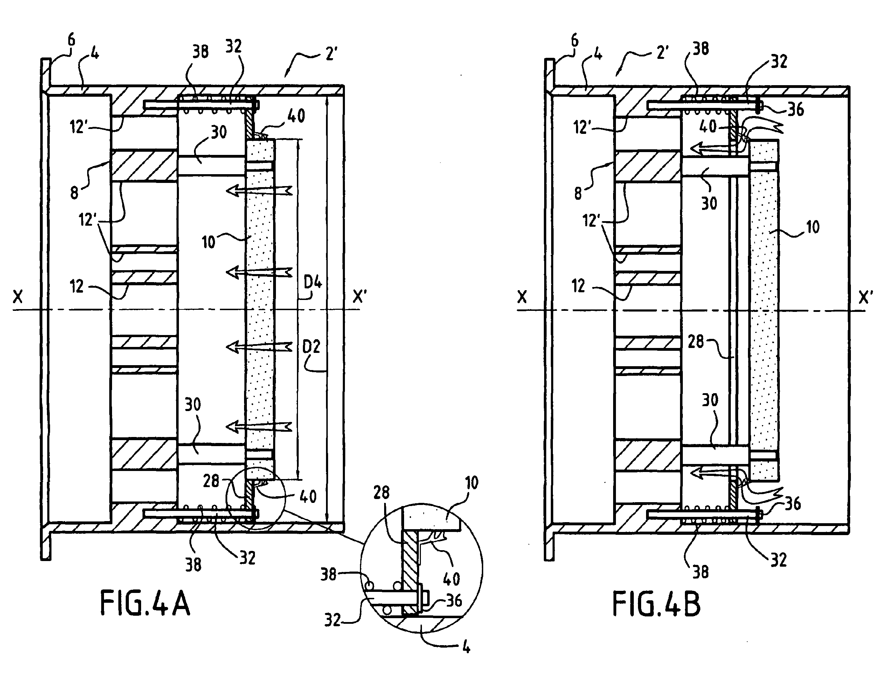

Selon un autre mode de réalisation du conditionneur 2' illustré par les figures 3, 4A et 4B, l'élément fixe du circuit de dérivation est constitué par la plaque poreuse 10 ayant un diamètre externe D4 inférieur au diamètre interne D2 du corps principal 4, et l'élément mobile est un anneau 28 disposé autour de la plaque poreuse 10, entre le diamètre externe D4 de la plaque poreuse et le diamètre interne D2 du corps principal 4.

La plaque poreuse 10 est par exemple fixée sur la plaque perforée 8 par l'intermédiaire de tiges de fixation 30 s'étendant vers l'amont parallèlement à l'axe XX' du corps principal 4.

La plaque perforée 8 comporte au moins une tige de guidage 32 s'étendant axialement vers l'amont et coopérant avec un trou 34 pratiqué au travers de l'anneau mobile 28 de façon à autoriser une translation axiale de celui-ci par rapport à la plaque poreuse 10. Sur les figures 4A et 4B, la plaque perforée 8 comporte de préférence deux tiges de guidage 32 diamétralement opposées. Ces tiges de guidage sont par exemple soudées sur la plaque perforée 8.

Chaque tige de guidage 32 comporte à son extrémité un élément 36 de type rondelle ou écrou permettant de former butée contre une face amont de l'anneau mobile 28.

De façon avantageuse, chaque tige de guidage 32 est par ailleurs munie d'un ressort 38 interposé entre la plaque perforée 8 et l'anneau mobile 28 de façon à maintenir l'anneau mobile autour de la plaque poreuse 10 en l'absence de colmatage de celle-ci.

Le mode de fonctionnement du conditionneur ainsi décrit découle de ce qui précède.

En condition d'utilisation normale (figure 4A), c'est à dire en l'absence de colmatage de plaque poreuse 10, l'anneau mobile 28 est maintenu autour de la plaque poreuse par l'intermédiaire des ressorts 38 équipant chaque tige de guidage 32. Dans cette configuration, l'ensemble du débit gaz provenant de la canalisation traverse la plaque poreuse 10, puis la plaque perforée 8.

En cas de colmatage du matériau poreux utilisé par la plaque poreuse 10 (figure 4B), la perte de charge du fluide augmente, ainsi que la différence de pression du fluide s'appliquant sur l'anneau mobile 28. Lorsque la force agissant sur l'anneau mobile 28 devient supérieure à la force de résistance exercée par les ressorts 38, les ressorts se compriment. L'anneau mobile 28 est alors déplacé en translation vers l'aval et coulisse dans les tiges de guidage 32. Un passage de dérivation pour le gaz s'ouvre ainsi autour de la plaque poreuse 10 permettant d'assurer la continuité de livraison de gaz.

Afin d'éviter un phénomène d'oscillations auto-entretenues de l'anneau mobile 28 qui aurait un effet néfaste sur la qualité de comptage, celui-ci comporte avantageusement au moins un élément réglable de butée 40 qui permet de maintenir dégagé le passage de dérivation en cas de colmatage de la plaque poreuse 10.

Cet élément de butée 40 est par exemple une languette pliée munie d'ergots qui sont destinés à venir en appui contre une face aval de la plaque poreuse 10 lorsque l'anneau mobile 28 se déplace en translation vers l'aval.

Pour éviter le phénomène d'oscillations auto-entretenues, tout autre système d'amortissement associé aux ressorts 38 peut également convenir.

De la même manière que pour le mode de réalisation précédent, il est possible de régler la distance entre la plaque perforée 8 et la plaque poreuse 10 en jouant sur la longueur des tiges de fixation 30. Dans la configuration d'utilisation normale du conditionneur, cette distance est par exemple de l'ordre de 5 à 25 mm, et de préférence d'environ 10 mm.

La force de retenue de l'anneau mobile 28 autour de la plaque poreuse 10 peut également être réglée en tarant de manière adéquate les ressorts 38, par exemple en fonction du diamètre de la canalisation et du niveau toléré de colmatage du matériau poreux.

Il n'est pas nécessaire que les éléments du conditionneur 2' de ce mode de réalisation possèdent des caractéristiques ferromagnétiques. Ils peuvent donc être constitués de tout type de matériau résistant à la pression du fluide.

Par ailleurs, le mode de fonctionnement intermédiaire décrit en liaison avec le mode de réalisation précédent peut également s'appliquer au conditionneur 2'. Dans une telle configuration (non représentée sur les figures), l'anneau disposé autour de la plaque poreuse est fixe par rapport à celle-ci. L'anneau est maintenu à une certaine distance de la plaque poreuse, par exemple par l'intermédiaire de la languette à ergots de sorte que le circuit de dérivation est en permanence ouvert. De la sorte, en l'absence de colmatage du matériau poreux, une partie substantielle du débit de fluide traverse la plaque poreuse et le débit restant s'écoule par le circuit de dérivation. En cas de colmatage du matériau poreux, l'ensemble du débit de fluide emprunte le circuit de dérivation de façon à assurer une continuité d'écoulement du débit de fluide.

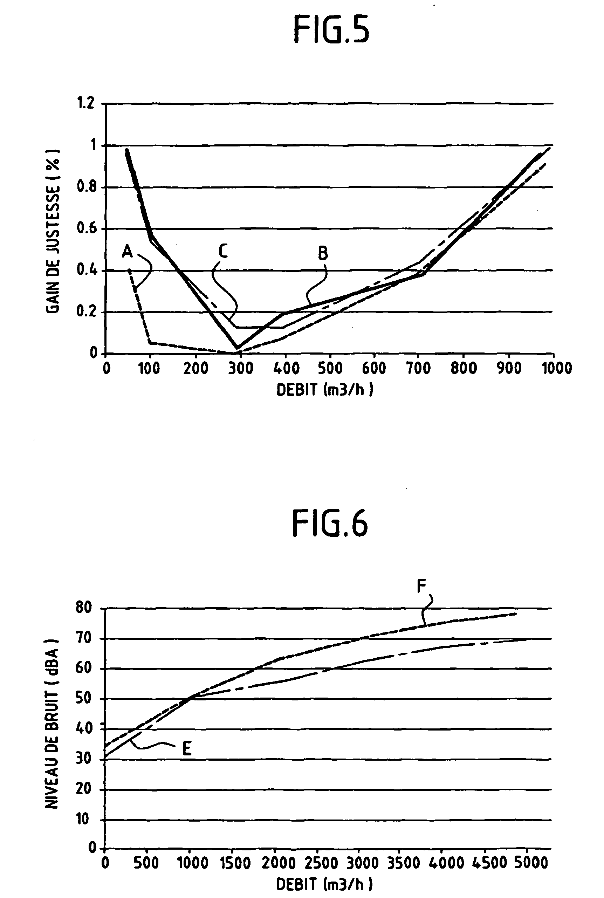

L'efficacité du conditionneur à circuit de dérivation tel que décrit dans ces deux modes de réalisation a été testée dans plusieurs configurations. La figure 5 illustre ainsi la courbe de gain de justesse (en pourcentage) d'un conditionneur en fonction du débit de gaz (en mètres cube par heure) traversant le conditionneur. Le gain de justesse (ou de précision) représente la différence entre l'erreur obtenue sans conditionneur et celle obtenue avec conditionneur.

Sur cette figure 5, la courbe A correspond à un conditionneur à écoulement dépourvu de circuit de dérivation et les courbes B et C à des conditionneurs munis d'un circuit de dérivation en configuration d'utilisation normale (c'est à dire sans colmatage du matériau poreux). Pour la courbe B, la plaque poreuse est distante de 10 mm environ de la plaque perforée, tandis que pour la courbe C, la distance entre les plaques poreuse et perforée est réglée à 20 mm environ.

Il ressort de ces courbes que l'ajout d'un circuit de dérivation ne dégrade pas les performances du conditionneur à écoulement, mais que bien au contraire, il les améliore. Le positionnement de la plaque poreuse à 10 ou 20 mm de la plaque perforée ne semble pas influencer sensiblement l'efficacité du conditionneur.

Le niveau de bruit d'un tel conditionneur à circuit de dérivation a également été testé. La figure 6 représente ainsi la courbe du niveau de bruit (en décibels A) d'un conditionneur en fonction du débit de gaz (en mètres cube par heure) traversant le conditionneur. La mesure a été réalisée dans une chambre anéchoïde à une distance de 1 m de la canalisation.

Sur cette figure 6, les courbes E et F correspondent à des conditionneurs munis d'un circuit de dérivation. Pour la courbe E, le conditionneur a été testé en configuration d'utilisation normale (c'est à dire en l'absence de colmatage du matériau poreux), tandis que pour la courbe F, le matériau poreux du conditionneur est colmaté et le circuit de dérivation ouvert.

Il ressort de ces courbes que dans sa configuration ouverte (courbe F), la présence du circuit de dérivation accroît très légèrement le niveau sonore par rapport à sa configuration d'utilisation normale (courbe E). On peut néanmoins noter que ce niveau sonore ne dépasse pas les 80 dBA ce qui correspond à un niveau de bruit largement acceptable.

Ces tests ont permis de mettre en évidence que l'ajout d'un circuit de dérivation au conditionneur ne dégrade en rien son efficacité et l'améliore même dans certaines conditions.

## Revendications

1. Conditionneur d'écoulement (2, 2') pour canalisation de transport de fluide, comprenant un corps principal (4) sensiblement tubulaire formant support, au moins un redresseur d'écoulement (8) disposé à l'intérieur du corps principal (4) essentiellement perpendiculairement à l'axe(XX')de celui-ci, et une plaque poreuse (10) disposée à l'intérieur du corps principal (4) en amont du redresseur d'écoulement (8) parallèlement à celui-ci, **caractérisé en ce que** les éléments (4, 8, 10) du conditionneur sont disposés de sorte qu'une partie substantielle du débit de fluide traverse le redresseur d'écoulement (8) et la plaque poreuse (10) en l'absence de colmatage de la plaque poreuse, et **en ce qu'**il comporte en outre un circuit de dérivation pour assurer une continuité d'écoulement du débit de fluide en cas de colmatage de ladite plaque poreuse (10).

2. Conditionneur selon la revendication 1, **caractérisé en ce qu'**il comporte un élément fixe (16 ; 10) et un élément mobile (14 ; 28) disposés à l'intérieur du corps principal (4), l'élément mobile (14 ; 28) étant en contact avec l'élément fixe (16 ; 10) en l'absence de colmatage de la plaque poreuse (10) et apte à être déplacé axialement en translation vers l'aval par rapport à l'élément fixe (16 ; 10) de façon à dégager un passage de dérivation pour le fluide en cas de colmatage de ladite plaque poreuse.

3. Conditionneur selon la revendication 2, **caractérisé en ce qu'**il comporte en outre des moyens pour maintenir l'élément mobile (14 ; 28) en contact avec l'élément fixe (16 ; 10) en l'absence de colmatage de la plaque poreuse (10) et des moyens de translation de l'élément mobile (14 ; 28) par rapport à l'élément fixe (16 ; 10) en cas de colmatage de ladite plaque poreuse.

4. Conditionneur selon la revendication 3, **caractérisé en ce que** l'élément mobile est une bague de support (14) de la plaque poreuse (10) ayant un diamètre externe (D1) inférieur à un diamètre interne (D2) du corps principal (4), et l'élément fixe est une couronne (16) disposée à l'intérieur du corps principal (4) en amont de la plaque poreuse (10), parallèlement à celle-ci et ayant un diamètre interne (D3) inférieur au diamètre externe (D1) de la bague mobile (14).

5. Conditionneur selon la revendication 4, **caractérisé en ce qu'**il comporte des moyens pour produire une force d'attraction magnétique de maintien de la bague mobile (14) contre la couronne fixe (16).

6. Conditionneur selon la revendication 5, **caractérisé en ce que** la couronne fixe (16) comporte au moins un aimant permanent (20) et **en ce que** la bague mobile (14) est essentiellement constituée d'au moins un élément ferromagnétique.

7. Conditionneur selon la revendication 6, **caractérisé en ce que** la couronne fixe (16) comporte une pluralité d'aimants permanents (20) en alliage de samarium-cobalt régulièrement répartis sur toute sa circonférence.

8. Conditionneur selon l'une quelconque des revendications 4 à 7, **caractérisé en ce que** la bague mobile (14) comporte au moins une tige de guidage (22) s'étendant axialement vers l'amont et coopérant avec un trou (24) pratiqué au travers de la couronne fixe (16) de façon à autoriser une translation axiale de la bague mobile (14) par rapport à la couronne fixe (16).

9. Conditionneur selon la revendication 8, **caractérisé en ce que** chaque tige de guidage (22) est munie d'un élément réglable de butée (26) avec une face amont de la couronne fixe (16).

10. Conditionneur selon la revendication 3, **caractérisé en ce que** l'élément fixe est constitué par la plaque poreuse (10) ayant un diamètre externe (D4) inférieur à un diamètre interne (D2) du corps principal (4), et l'élément mobile est un anneau (28) disposé autour de la plaque poreuse (10), entre le diamètre externe de la plaque poreuse et le diamètre interne du corps principal.

11. Conditionneur selon la revendication 10, **caractérisé en ce que** le redresseur d'écoulement (8) comporte au moins une tige de guidage (32) s'étendant axialement vers l'amont et coopérant avec un trou (34) pratiqué au travers de l'anneau mobile (28) de façon à autoriser une translation axiale dudit anneau mobile (28) par rapport à la plaque poreuse (10).

12. Conditionneur selon la revendication 11, **caractérisé en ce que** chaque tige de guidage (16) est munie d'un ressort (38) interposé entre le redresseur d'écoulement (8) et l'anneau mobile (28) de façon à maintenir ledit anneau mobile (28) autour de la plaque poreuse (10).

13. Conditionneur selon l'une quelconque des revendications 10 à 12, **caractérisé en ce que** l'anneau mobile (28) comporte au moins un élément réglable de butée (40) destiné à maintenir dégagé le passage de dérivation en cas de colmatage de la plaque poreuse (10).

14. Conditionneur selon l'une quelconque des revendications 1 à 13, **caractérisé en ce que** la plaque poreuse (10) présente une épaisseur de l'ordre de 10 mm et est réalisée en un alliage de nickel-chrome.

15. Conditionneur selon l'une quelconque des revendications 1 à 14, **caractérisé en ce que** la distance entre le redresseur d'écoulement (8) et la plaque poreuse (10) en l'absence de colmatage de la plaque poreuse est comprise entre 5 et 25 mm environ.

16. Conditionneur selon l'une quelconque des revendications 1 à 15, **caractérisé en ce que** le redresseur d'écoulement est une plaque perforée (8).

17. Conditionneur selon l'une quelconque des revendications 1 à 16, **caractérisé en ce que** le fluide est un fluide gazeux.

## Claims

1. A flow conditioner (2, 2') for a fluid transport pipe, the conditioner comprising a substantially tubular main body (4) forming a support, at least one flow rectifier (8) disposed inside the main body (4) essentially perpendicularly to its axis (XX'), and a porous plate (10) disposed inside the main body (4) upstream from the flow rectifier (8) and parallel thereto, the conditioner being **characterized in that** the elements (4, 8, 10) of the conditioner are disposed in such a manner that a substantial fraction of the fluid flow passes through the flow rectifier (8) and the porous plate (10) in the absence of the porous plate becoming clogged, and **in that** it further includes a bypass circuit for ensuring continuity of fluid flow in the event of said porous plate (10) becoming clogged.

2. A conditioner according to claim 1, **characterized in that** it includes a stationary element (16; 10) and a moving element (14; 28) disposed inside the main body (4), the moving element (14; 28) being in contact with the stationary element (16; 10) in the absence of the porous plate (10) becoming clogged, and being suitable for being moved in axial translation in a downstream direction relative to the stationary elements (16; 10) so as to release a bypass passage for the fluid in the event of said porous plate becoming clogged.

3. A conditioner according to claim 2, **characterized in that** it further includes means for holding the moving element (14; 28) in contact with the stationary element (16; 10) in the absence of the porous plate (10) becoming clogged, and means for allowing the moving element (14; 28) to move in translation relative to the stationary element (16; 10) in the event of said porous plate becoming clogged.

4. A conditioner according to claim 3, **characterized in that** the moving element is a support ring (14) for supporting the porous plate (10), having an outside diameter (D1) smaller than an inside diameter (D2) of the main body (4), and the stationary element is a ring (16) disposed inside the main body (4) upstream from the porous plate (10), parallel thereto, and having an inside diameter (D3) smaller than the outside diameter (D1) of the moving ring (14).

5. A conditioner according to claim 4, **characterized in that** it includes means for producing a magnetic attraction force to hold the moving ring (14) against the stationary ring (16).

6. A conditioner according to claim 5, **characterized in that** the stationary ring (16) includes at least one permanent magnet (20), and **in that** the moving ring (14) is essentially constituted by at least one ferromagnetic element.

7. A conditioner according to claim 6, **characterized in that** the stationary ring (16) has a plurality of permanent magnets (20) of samarium-cobalt alloy regularly distributed around its entire circumference.

8. A conditioner according to any one of claims 4 to 7, **characterized in that** the moving ring (14) includes at least one guide rod (22) extending axially upstream and co-operating with a corresponding hole (24) formed through the stationary ring (16) so as to allow the moving ring (14) to move in axial translation relative to the stationary ring (16).

9. A conditioner according to claim 8, **characterized in that** each guide rod (22) is provided with an adjustable abutment element (26) for coming into abutment against an upstream face of the stationary ring (16).

10. A conditioner according to claim 3, **characterized in that** the stationary element is constituted by the porous plate (10) having an outside diameter (D4) less than an inside diameter (D2) of the main body (4), and the moving element is a ring (28) disposed around the porous plate (10) between the outside diameter of the porous plate and the inside diameter of the main body.

11. A conditioner according to claim 10, **characterized in that** the flow rectifier (8) includes at least one guide rod (32) extending axially upstream and co-operating with a corresponding hole (34) formed through the moving ring (28) so as to allow said moving ring (28) to move in axial translation relative to the porous plate (10).

12. A conditioner according to claim 11, **characterized in that** each guide rod (16) is provided with a spring (38) interposed between the flow rectifier (8) and the moving ring (28) so as to hold said moving ring (28) around the porous plate (10).

13. A conditioner according to any one of claims 10 to 12, **characterized in that** the moving ring (28) includes at least one adjustable abutment element (40) for holding the bypass passage open in the event of the porous plate (10) becoming clogged.

14. A conditioner according to any one of claims 1 to 13, **characterized in that** the porous plate (10) presents a thickness of about 10 mm and is made of a nickel-chromium alloy.

15. A conditioner according to any one of claims 1 to 14, **characterized in that** the distance between the flow rectifier (8) and the porous plate (10) in the absence of the porous plate becoming clogged lies in the range 5 mm to 25 mm, approximately.

16. A conditioner according to any one of claims 1 to 15, **characterized in that** the flow rectifier is a perforated plate (8).

17. A conditioner according to any one of claims 1 to 16, **characterized in that** the fluid is a gaseous fluid.

## Patentansprüche

1. Strömungskonditionierer (2, 2') für eine Fluidförderleitung, mit einem einen Halter bildenden, im wesentlichen röhrenförmigen Hauptkörper (4), wenigstens einem Strömungsgleichrichter (8), der in dem Hauptkörper (4) im wesentlichen senkrecht zu dessen Achse (XX') angeordnet ist, sowie einer porösen Platte (10), die in dem Hauptkörper (4) vor dem Strömungsgleichrichter (8), parallel zu diesem angeordnet ist, **dadurch gekennzeichnet, daß** die Elemente (4, 8, 10) des Konditionierers derart angeordnet sind, daß - wenn die poröse Platte nicht zugesetzt ist - ein wesentlicher Teil des Fluidstroms den Strömungsgleichrichter (8) sowie die poröse Platte (10) durchströmt, und daß er ferner einen Zweigkreis umfaßt, um eine Strömungskontinuität des Fluidstroms im Falle einer Verstopfung der porösen Platte (10) zu gewährleisten.

2. Konditionierer nach Anspruch 1, **dadurch gekennzeichnet, daß** er ein festes Element (16; 10) und ein bewegliches Element (14; 28) aufweist, die in dem Hauptkörper (4) angeordnet sind, wobei das bewegliche Element (14; 28) mit dem festen Element (16; 10) in Kontakt ist, wenn die poröse Platte (10) nicht zugesetzt ist, und geeignet ist, gegenüber dem festen Element (16; 10) in stromabwärtiger Richtung axial verschieblich bewegt zu werden, so daß im Falle einer Verstopfung der porösen Platte ein Abzweigdurchgang für das Fluid freigegeben wird.

3. Konditionierer nach Anspruch 2, **dadurch gekennzeichnet, daß** er ferner Mittel umfaßt, um das bewegliche Element (14; 28) mit dem festen Element (16; 10) in Kontakt zu halten, wenn die poröse Platte (10) nicht zugesetzt ist, sowie Mittel zum Verschieben des beweglichen Elements (14; 28) gegenüber dem festen Element (16; 10) im Falle einer Verstopfung der porösen Platte.

4. Konditionierer nach Anspruch 3, **dadurch gekennzeichnet, daß** das bewegliche Element ein Ring (14) zum Halten der porösen Platte (10) ist, der einen Außendurchmesser (D1) aufweist, welcher kleiner als ein Innendurchmesser (D2) des Hauptkörpers (4) ist, und daß das feste Element ein Kranz (16) ist, welcher in dem Hauptkörper (4) vor der porösen Platte (10), parallel zu dieser angeordnet ist und einen Innendurchmesser (D3) aufweist, der kleiner als der Außendurchmesser (D1) des beweglichen Rings (14) ist.

5. Konditionierer nach Anspruch 4, **dadurch gekennzeichnet, daß** er Mittel zum Erzeugen einer magnetischen Anziehungskraft zum Halten des beweglichen Rings (14) an dem festen Kranz (16) aufweist.

6. Konditionierer nach Anspruch 5, **dadurch gekennzeichnet, daß** der feste Kranz (16) wenigstens einen Permanentmagneten (20) aufweist und daß der bewegliche Ring (14) im wesentlichen von wenigstens einem ferromagnetischen Element gebildet ist.

7. Konditionierer nach Anspruch 6, **dadurch gekennzeichnet, daß** der feste Kranz (16) eine Vielzahl von Permanentmagneten (20) aus Samarium-Kobalt-Legierung aufweist, die über seinen gesamten Umfang gleichmäßig verteilt sind.

8. Konditionierer nach einem der Ansprüche 4 bis 7, **dadurch gekennzeichnet, daß** der bewegliche Ring (14) wenigstens einen Führungsstift (22) aufweist, der sich axial in stromaufwärtiger Richtung erstreckt und mit einem durch den festen Kranz (16) hindurch ausgebildeten Loch (24) zusammenwirkt, um eine Axialverschiebung des beweglichen Rings (14) gegenüber dem festen Kranz (16) zuzulassen.

9. Konditionierer nach Anspruch 8, **dadurch gekennzeichnet, daß** jeder Führungsstift (22) mit einem einstellbaren Element (26) für den Anschlag mit einer stromaufwärtigen Seite des festen Kranzes (16) versehen ist.

10. Konditionierer nach Anspruch 3, **dadurch gekennzeichnet, daß** das feste Element von der porösen Platte (10) gebildet ist, die einen Außendurchmesser (D4) aufweist, welcher kleiner als ein Innendurchmesser (D2) des Hauptkörpers (4) ist, und daß das bewegliche Element ein Ring (28) ist, der um die poröse Platte (10), zwischen dem Außendurchmesser der porösen Platte und dem Innendurchmesser des Hauptkörpers angeordnet ist.

11. Konditionierer nach Anspruch 10, **dadurch gekennzeichnet, daß** der Strömungsgleichrichter (8) wenigstens einen Führungsstift (32) aufweist, der axial in stromaufwärtiger Richtung verläuft und mit einem durch den beweglichen Ring (28) hindurch ausgebildeten Loch (34) zusammenwirkt, um eine Axialverschiebung des beweglichen Rings (28) gegenüber der porösen Platte (10) zuzulassen.

12. Konditionierer nach Anspruch 11, **dadurch gekennzeichnet, daß** jeder Führungsstift (16) mit einer Feder (38) versehen ist, die zwischen dem Strömungsgleichrichter (8) und dem beweglichen Ring (28) angeordnet ist, um den beweglichen Ring (28) um die poröse Platte (10) herum zu halten.

13. Konditionierer nach einem der Ansprüche 10 bis 12, **dadurch gekennzeichnet, daß** der bewegliche Ring (28) wenigstens ein einstellbares Anschlagelement (40) aufweist, das dazu bestimmt ist, den Abzweigdurchgang im Falle einer Verstopfung der porösen Platte (10) frei zu halten.

14. Konditionierer nach einem der Ansprüche 1 bis 13, **dadurch gekennzeichnet, daß** die poröse Platte (10) eine Dicke in der Größenordnung von 10 mm aufweist und aus einer Nickel-Chrom-Legierung gefertigt ist.

15. Konditionierer nach einem der Ansprüche 1 bis 14, **dadurch gekennzeichnet, daß** der Abstand zwischen dem Strömungsgleichrichter (8) und der porösen Platte (10) bei Nichtverstopfung der porösen Platte etwa 5 bis 25 mm beträgt.

16. Konditionierer nach einem der Ansprüche 1 bis 15, **dadurch gekennzeichnet, daß** der Strömungsgleichrichter eine Lochplatte (8) ist.

17. Konditionierer nach einem der Ansprüche 1 bis 16, **dadurch gekennzeichnet, daß** das Fluid ein gasförmiges Fluid ist.
